Europäisches Patentamt

European Patent Office

Office européen des brevets

(11) Publication number: **0 165 896**

**A1**

## (12) EUROPEAN PATENT APPLICATION

(21) Application number: **85810236.1**

(22) Date of filing: **17.05.85**

(51) Int. Cl.⁴: **B 29 C 67/20**
**A 01 G 13/02, B 32 B 7/02**
**E 04 B 1/78**

(30) Priority: **24.05.84 GB 8413341**

(43) Date of publication of application:
**27.12.85 Bulletin 85/52**

(84) Designated Contracting States:
**BE DE FR NL**

(71) Applicant: **CIBA-GEIGY AG**
**Klybeckstrasse 141**
**CH-4002 Basel(CH)**

(71) Applicant: **PETER WARING LTD.**
**15/16 Lincoln's Inn Fields**
**London, WC2A 3ER(GB)**

(72) Inventor: **Anderson, Paul**
**100 Mawson Road**
**Cambridge CB1 2EA(GB)**

(72) Inventor: **Bailey, Martin Campbell**
**5 Broadfields Road**
**Gislingham Eye Suffolk(GB)**

(72) Inventor: **Crame, Nicholas John**
**Banks Cottage Straight Road**
**Battisford Stowmarket Suffolk(GB)**

(72) Inventor: **Winterbottom, Kenneth**
**103 Duxford Road**
**Whittlesford Cambridge CB2 4NJ(GB)**

(54) Method for insulating surfaces.

㊗ Surfaces such as newly laid concrete, bitumen, or farmland containing growing or fully grown crops are protected against adverse weather conditions by the application of two layers of flexible sheeting with a layer of foamed thermoset resin therebetween, especially urea-formaldehyde resin, this foamed resin being positioned in discrete areas such that the sheets are held apart but the void between them is incompletely filled. The foam may be formed in a series of separate deposits or in continuous or discontinuous lines. Usually, a maximum of 50% of the area of the sheets contacts the foam, a maximum of 30% being preferred.

An apparatus for applying the insulating means comprises a frame (21) upon which are mounted two rolls (27, 28) of the sheeting and, between these rolls, an outlet (32) for the foamed or foaming thermosetting resin.

./...

Croydon Printing Company Ltd.

*Fig. 2*

Case 37-14885/+/ARL 350

## METHOD FOR INSULATING SURFACES

This invention relates to a method for insulating surfaces from adverse weather conditions using a foam-cored structure, to apparatus for making such structures, and to structures made by the process.

The choice of suitable insulation for large surface areas, such as newly laid concrete or bitumen, or farmland containing growing or fully grown crops, is a matter of balancing the economy of using a cheap, but not particularly effective insulant such as polyethylene sheeting, against the expense of using a more effective insulant such as straw or foamed resin. The adequacy of insulation for such large surface areas is usually judged by its ability to hold the surface above $0^{\circ}C$ for a limited period. A cheap sheeting laid over the surface is often adequate for this purpose. However, when exceptionally severe conditions are expected, or where protection is required for a prolonged period, particularly throughout the whole of the winter months, cheap and simple methods often prove inadequate.

There is therefore a need for more effective insulation but, if such means proves expensive, the economic advantage in protecting the surface containing, for example, a grown crop, is lost by the cost of the insulation. A more effective means of insulation than simple plastic sheeting is therefore required, but at a cost that is considerably cheaper than providing a continuous layer of foam.

It has now been found that when two layers of flexible sheeting, having a partial layer of foamed resin between them, such that air is trapped between the sheeting layers in areas having no foam, then adequate insulation is provided. Such insulation will keep the protected surface above 0°C for prolonged periods in all but the most severe wintry conditions. The cost of providing such a partial layer of foam is, of course, less than the cost of providing a full layer of foam but, because a layer of air is trapped between the sheeting layers, the insulation is closer to that of a fully foamed layer than it is to that obtained with only two layers of flexible sheeting. A further advantage of this invention is that it offers a choice of insulation effectiveness and cost. By putting more or less foam between the layers of flexible sheeting, a greater or lesser degree of insulation can be achieved. The insulation may therefore be adjusted according to the location of the site, the expected climatic conditions, the nature of the surface to be protected, and the duration of the required protection.

The use of an insulating layer having spaced voids in which there is no insulant has been previously disclosed in United States Patent No. 3 130 112. This patent describes lightweight garments comprising a pair of heat-reflecting sheets separated from each other by a spacer of low thermal conductivity, this spacer being perforated to provide a structure which is open and permits the maximum free void. The heat-reflecting sheets are arranged so that their high reflectance coatings face each other and, due to the presence of the voids, the opposed coatings "see" each other. In this way the efficiency of the thermal insulation is maximised. It will be appreciated that the provision of high reflectance coatings is an expensive operation, and the expense can only be justified where efficient, low weight, flexible insulation is required. There is no indication that the use of a spacer having voids would be of any advantage in the absence of high reflectance coatings, nor that the assembly might be used to provide a cheap insulation for large areas.

Other disclosures of the use of perforated foam cores are made in GB 2 074 039, where the purpose of the perforations is to improve sound insulation, and GB 1 137 000, where slits are made in the foam to render it more flexible and stretchable. Again, there is no indication that there would be any purpose in having a partial layer of foam in the insulation of large surfaces, where sound insulation and flexibility are not important criteria.

The insulating structure prepared in accordance with this invention comprises a first layer of flexible sheeting and a second layer of flexible sheeting, having a foamed thermoset resin therebetween, said foamed resin being positioned in discrete areas such that the flexible sheets are held apart but the void between them is incompletely filled with the said foamed resin.

This invention provides a process for insulating surfaces which comprises applying to the said surface a layer of flexible sheeting, applying onto said sheeting in discrete areas foamed or foaming thermosetting resin, applying a second layer of flexible sheeting over the thermosetting resin, and allowing the resin to cure.

Suitable flexible sheeting that may be used in accordance with this invention may be of natural or synthetic rubber, impregnated paper, or, preferably, a thermoplastic polymer such as polyvinyl chloride, polypropylene, or polyethylene, the last named being particularly preferred. Such sheeting may be transparent or opaque, colourless or coloured. In a preferred embodiment, the lower sheet is colourless and transparent, for economy, and the upper sheet is opaque, such that any solar radiation is absorbed and the surface warmed.

The resin may be of polyurethane, phenolic, or aminoplast resin. For reasons of economy it is preferably a urea-formaldehyde resin. The resin may be foamed by means that are conventional for the material used. For example, a phenolic resin may be mixed with a low boiling liquid as blowing agent, and with a hardener, applied between the flexible sheets, and allowed to foam in situ. A urea-formaldehyde resin foam may be prepared by aerating the resin or its hardener in the presence of a surfactant and adding the unfoamed component, hardener or resin, just before application of the foam to the flexible sheets.

The thermosetting foam or foaming mixture may be applied through one or more conduits in any desired pattern, or randomly. Preferably the foam is formed into a series of separate deposits or continuous or discontinuous lines. It is especially preferred if the foam forms continuous lines at both edges of the flexible sheeting, so that ingress of cold air between the sheets is prevented. As previously indicated, the ratio of the area of sheet having foam in contact with it, to the area of sheet free from foam may be varied according to requirements. Normally no more than 50% of the area of the sheets needs to contact the foam, amounts below 30% being preferred.

Whilst the upper and lower sheets are held apart by the foam over most of the area, it is possible for these sheets to touch each other in places and yet the structure will still provide adequate insulation due to the presence of foam and air space throughout the rest of the structure.

The preferred process according to this invention is one in which the foamed or foaming resin is applied to the first layer of flexible sheeting as the sheeting is unwound from a roll, and the second layer of flexible sheeting is unwound from a roll over the resin, the rolls being moved across the surface to be insulated.

Application of a layer of flexible sheeting to a large surface area such as a field is a known process, being described in, for example, British Patent Specification No. 2 055 534A. The sheeting is held on a roll that is moved across the surface unwinding as it travels. When the surface to be covered is soil, the edges may be held down by turning a strip of soil onto each edge, or by laying the edges in a furrow and filling the furrow with soil. Such methods are known and have been described in British Patent Specification No. 1 504 967.

A process for the insulation of surfaces is also disclosed in French Patent No. 2 442 006. In this patent there are described screens for insulating growing areas, these screens being multi-layered, one of which may be a foam. Where foams are used, the layer is always complete, rather than being restricted to discrete areas. United States Patent No. 4 179 547 describes a sheeting for protecting crops, but in this patent the novelty resides in the use, in the sheeting, of a phosphate, which acts as a barrier to infra red radiation. The use of a foam layer is not envisaged.

Apparatus suitable for carrying out the process of the present invention requires means for holding two rolls of sheeting and a means for applying foamed or foaming thermosetting resin in discrete areas between the sheeting. It further preferably has means for holding the two edges of the sheeting on or in the ground.

The application of a foam, or of a foamable mixture between two layers of sheeting, is a known process and so apparatus for achieving this is also known. British Patent Specification No. 968 050 shows the application of a foamable polyurethane mixture in a zig-zag path between two layers of sheeting. The polyurethane is allowed to flow and foam, giving a uniform layer - i.e. one that is free from voids. British Patent Specification No. 1 546 642 describes a method of forming rigid, foam-filled panels, preferably having metal upper and lower skins, in which the foamable mixture is deposited from a foam head inside the cavity formed by these skins, the head travelling in a zig-zag manner. An essential feature of this process is the even distribution of foamable material, in order to ensure that there are no voids; this even distribution is controlled by the drive mechanism of the foam head. An apparatus for applying a foam, or a foamable mixture, in discrete areas between two flexible sheets, has not previously been disclosed.

Accordingly, this invention further provides an apparatus suitable for carrying out the process as described, comprising

(A) a support frame upon which are mounted two rolls of flexible sheeting rotatably supported by the frame, and

(B) means for applying a foamed or foaming thermosetting resin in discrete areas between the flexible sheeting layers as they unwind from the said two rolls.

Preferably the apparatus further contains

(C) means for causing the marginal edges of the said flexible sheeting to be retained in or on the ground.

The means (B) for applying the thermosetting resin is preferably one that will supply the resin in a foamed state, comprising a storage means for the resin, a storage means for the hardener, means for supplying compressed air, means for delivering these to a mixing chamber, and means for passing the foamed mixture to a discharge means in a position between the two rolls of flexible sheeting. The discharge means is preferably a length of conduit having a series of outlets, the axis of the conduit being transverse to the direction of movement of the sheeting. This discharge conduit may be mounted rigidly to the support frame, or it may be mounted in such a way that it is capable of reciprocating movement in the direction of its length, thus causing the foamed resin to be discharged in a zig-zag pattern across the sheeting. In an alternative arrangement, the extremeties of the discharge conduit may be mounted rigidly to the support frame and linked via flexible couplings to a central portion that is capable of reciprocating movement in the direction of its length. The apparatus may further contain a second discharge conduit if desired.

The means (C) for causing the marginal edges to be retained in or on the ground usually comprises a pair of furrow-forming members such as rotatable discs and a pair of compacting rollers situated behind the furrow-forming members, mounted on the support frame, or two coulters that turn over a narrow strip of soil onto the said marginal edges.

The invention will now be illustrated by means of the accompanying drawings in which

Figure 1 is a digrammatic side representation of one embodiment of the present process,

Figures 2 and 3 are a perspective view and a side view, respectively, of an apparatus for carrying out the process.

Figures 4 and 5 are plan views of two variations in the foam application means and the patterns of foam delivered by these.

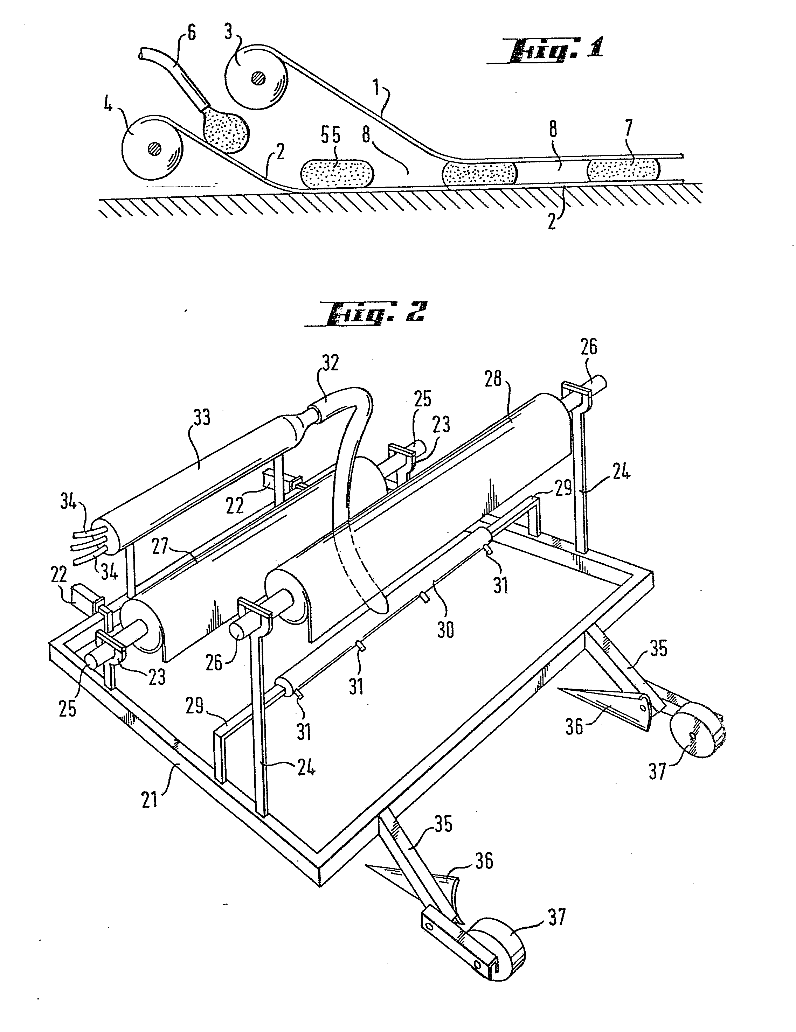

Referring to Figure 1, flexible sheeting 1 and 2 is held on rolls 3 and 4. As these are unwound, thermosetting foam (or a thermosetting foaming mixture) 5, is delivered by pipe 6 to form an insulating layer 7 comprising a sheet-foam-sheet 'sandwich'. The foam is shown being supplied discontinuously with gaps 8 between foamed areas. The presence of the foam holds the upper flexible sheet 1 away from the lower flexible sheet 2 and hence traps a layer of air that also acts as insulant.

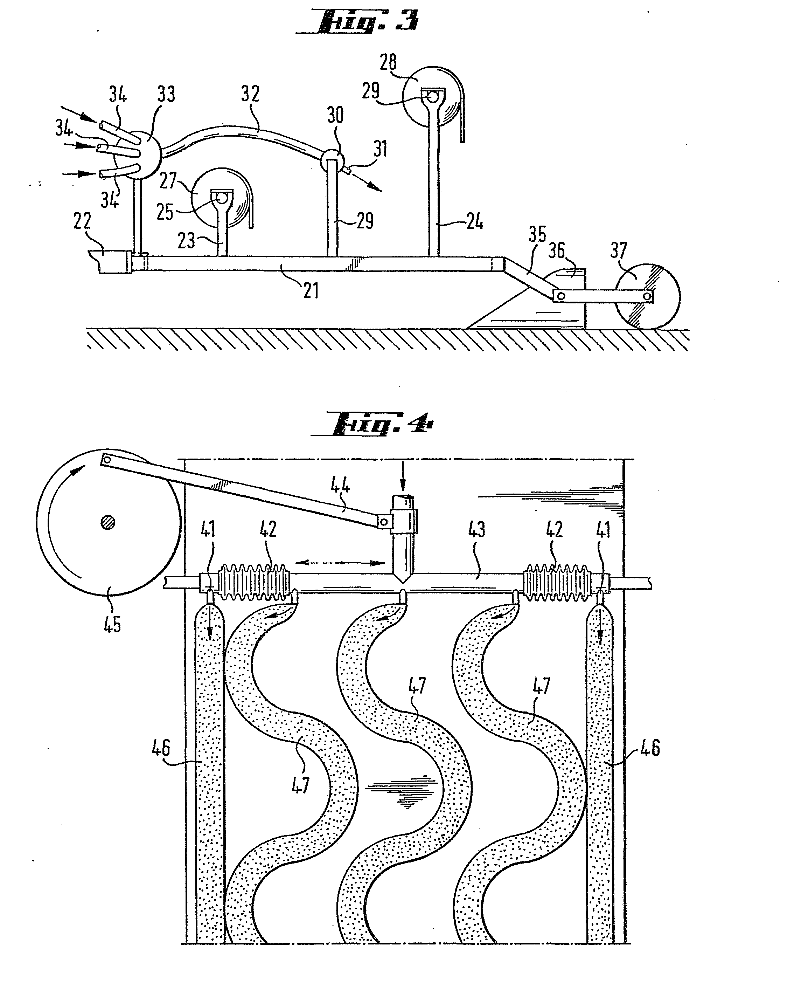

Perspective and side views of one apparatus for carrying out this invention are shown in Figures 2 and 3. A frame 21, typically of welded angle iron, is fitted with connecting links 22 for attachment to a tractor. Mounted on each side of the frame are two upstanding arms 23 and 24 having bifurcated upper ends.

These upper ends receive and rotatably support the shafts 25 and 26 of rolls of flexible sheeting 27 and 28. Also mounted on each side of the frame is a support 29 for a foam outlet pipe 30 having a series of nozzles 31. The foam outlet pipe 30 is attached via a conduit 32 to a mixer 33. This mixer is fed with a supply of resin, hardener and, if a foam is to be prepared by aeration, with a source of compressed air, through several conduits 34. The precise number of such conduits and their contents may be varied according to the requirements of the thermosettable mixture. Attached to the rear of the frame are supports 35 to which are fixed two coulters 36 and compacting rollers 37. Passage of these through the soil will turn over a narrow strip of soil onto each edge of the flexible sheets and so weigh it down to give more resistance against winds.

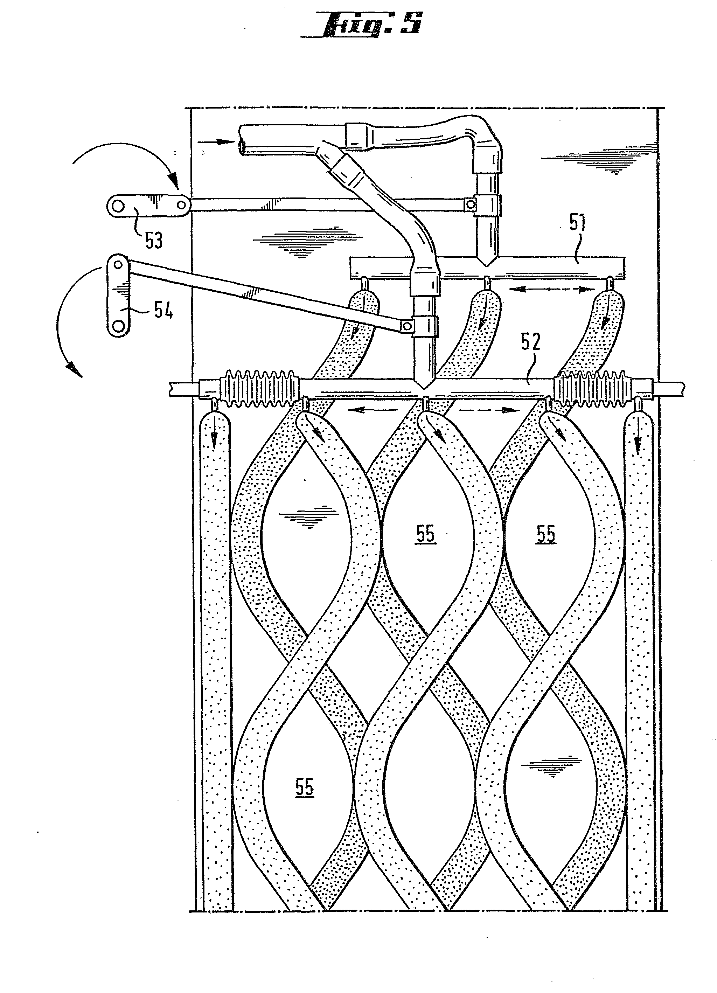

Figure 4 shows a plan view of a different arrangement for the foam outlet pipe. In this arrangement the pipe has two rigidly mounted end pieces 41, linked by flexible couplings 42 to the central portion of the pipe 43. This central portion reciprocates to left and right as directed by a push rod 44 attached to an eccentric drive 45. This arrangement gives a foam pattern having outside streams 46 parallel to the edges of the flexible sheet, and a series of inner streams 47 having a serpentine pattern.

Figure 5 shows a more complex arrangement for the foam pipe in which there are two reciprocating portions 51 and 52 attached to two eccentric drives 53 and 54, arranged to produce a pattern in which the air is trapped into discrete areas 55..

This invention has been described in connection with a single insulating layer of foamed thermoset resin but it is within the scope of this invention to apply a multiplicity of such layers, each separated from the adjacent layer by a layer of flexible sheeting.

CLAIMS

1.      A process for insulating a surface which comprises applying to the said surface a layer of flexible sheeting, applying onto said sheeting in discrete areas foamed or foaming thermosetting resin, applying a second layer of flexible sheeting over the thermosetting resin, and allowing the resin to cure.

2.      A process as claimed in claim 1 wherein the flexible sheeting is of a thermoplastic polymer.

3.      A process as claimed in claim 1 or 2 wherein the resin is a urea-formaldehyde resin.

4.      A process as claimed in any previous claim wherein the resin is formed into a series of separate deposits or continuous or discontinuous lines, with continuous lines at both edges of the flexible sheeting.

5.      A process as claimed in any previous claim wherein a maximum of 50% of the area of the sheeting contacts the foam.

6.      A process as claimed in any previous claim wherein the foamed or foaming resin is applied to the first layer of flexible sheeting as the sheeting is unwound from a roll, and the second layer of flexible sheeting is unwound from a roll over the resin, the rolls being moved across the surface to be insulated.

7.      An apparatus suitable for carrying out a process as claimed in claim 1, comprising

(A) a support frame upon which are mounted two rolls of flexible sheeting rotatably supported by the frame, and

(B) means for applying a foamed or foaming thermosetting resin in discrete areas between the flexible sheeting layers as they unwind from the said two rolls.

8.    An apparatus as claimed in claim 7 that further contains

(C) means for causing the marginal edges of the said flexible sheeting to be retained in or on the ground.

9.    An apparatus as claimed in either of claims 7 and 8 in which the means (B) for applying the thermosetting resin is one that comprises a storage means for the resin, a storage means for the hardener, means for supplying compressed air, means for delivering these to a mixing chamber, and means for passing the foamed mixture to a discharge means in a position between the two rolls of flexible sheeting.

10.    An apparatus as claimed in claim 9, wherein the discharge means is a length of conduit having a series of outlets, the axis of the conduit being transverse to the direction of movement of the sheeting, the conduit being mounted in such a way that it is capable of reciprocating movement in the direction of its length.

11.    An apparatus as claimed in claim 9 wherein the discharge means is a length of conduit having a series of outlets, the axis of the conduit being transverse to the direction of movement of the sheeting, the conduit being mounted with its extremities fixed rigidly to the support frame and linked via flexible couplings to a central portion that is capable of reciprocating movement in the direction of its length.

Fig. 1

Fig. 2

0165896

**Fig. 3**

**Fig. 4**

## Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | US-A-3 530 029 (J.H. LEMELSON)<br><br>* Claims 1,4,7-13; column 3, lines 17-25; column 4, line 46 - column 6, line 67; column 12, line 43 - column 14, line 25; figures 16,17 *<br><br>--- | 1,2,4-7,10,11 | B 29 C 67/20<br>A 01 G 13/02<br>B 32 B 7/02<br>E 04 B 1/78 |
| A,D | GB-A- 968 050 (TECHNIFOAM CO.)<br>* Claim 1; page 1, line 18 - page 2, line 5; figure 1 *<br><br>--- | 1,7,10 | |
| A | US-A-4 201 150 (H. EDWARDS)<br>* Claims 1,2,4; column 1, line 9 - column 3, line 27; column 5, lines 17-37; figure 1 *<br><br>--- | 7,9,10 | |
| D,A | GB-A-1 504 967 (P. WARING)<br>* Claims 1,2,7,8; page 3, lines 38-74; figure 7 *<br><br>--- | 8 | TECHNICAL FIELDS SEARCHED (Int. Cl.4)<br><br>B 29 C<br>A 01 G<br>B 32 B<br>E 04 B |
| D,A | FR-A-2 442 006 (R. COUREUR et al.)<br>* Claims 1,3; page 1, line 28 - page 2, line 23; page 4, lines 3-7; figure 3 *<br><br>--- | 2,3 | |
| D,A | GB-A-1 546 642 (KORNYLAK CO.)<br><br>* Claims 1,2; page 1, line 21 - page 4, line 91; figures 1,3 *<br><br>--- -/- | 1,6,7,9-11 | |

The present search report has been drawn up for all claims

| Place of search | Date of completion of the search | Examiner |
|---|---|---|
| THE HAGUE | 22-08-1985 | BLASBAND I. |

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl.4) |
| D,A | GB-A-2 055 534 (PETER WARING LTD.)<br>* Claim 1; page 1, line 53 - page 2, line 37; page 2, lines 107-130; figure 4 *<br><br>----- | 7-11 | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 22-08-1985 | BLASBAND I. |